Europäisches Patentamt

European Patent Office

Office européen des brevets

(19)

(11) Publication number: **0 026 025**
**B1**

(12) **EUROPEAN PATENT SPECIFICATION**

(45) Date of publication of patent specification: **09.11.83**

(51) Int. Cl.³: **F 24 J 3/00**

(21) Application number: **80200892.0**

(22) Date of filing: **22.09.80**

(54) **A method for subterraneously, or at least mainly subterraneously, placing a piping system, for instance for temporarily storing heat, in a preferably water saturated ground, as well as a piping system placed subterraneously, or at least mainly subterraneously, by applying said method.**

(30) Priority: **23.09.79 NL 7907076**

(43) Date of publication of application:
**01.04.81 Bulletin 81/13**

(45) Publication of the grant of the patent:
**09.11.83 Bulletin 83/45**

(84) Designated Contracting States:
**BE DE FR GB IT LU NL**

(56) References cited:
**NL - C - 66 235**
**NL - C - 67 820**

(73) Proprietor: **HOLLANDSCHE BETON GROEP N.V.**
**489, Generaal Spoorlaan**
**NL-2285 TA Rijswijk (NL)**

(72) Inventor: **van Weele, Abraham François**
**Brugweg 78**
**NL-2741 KZ Waddinxveen (NL)**
Inventor: **Amesz, Adriaan Wilhelm**
**Dreef 158**
**NL-2803 HE Gouda (NL)**

(74) Representative: **van der Beek, George Frans, Ir.**
**et al,**
**Nederlandsch Octrooibureau P.O. Box 29720**
**NL-2502 LS The Hague (NL)**

Courier Press, Leamington Spa, England.

# A method for subterraneously, or at least mainly subterraneously, placing a piping system, for instance for temporarily storing heat, in a preferably water saturated ground, as well as a piping system placed subterraneously, or at least mainly subterraneously, by applying said method

The invention relates to a method for subterraneously, or at least mainly subterraneously, placing a piping system, for instance for temporarily storing heat, in a particulate, preferably water saturated, ground, such as sand, through which piping system there may be pumped a hot liquid in order to transfer heat to the ground or a cold liquid in order to absorb heat from the ground respectively, said piping system having the form of consecutive U-shaped loops with vertical legs.

From NL—C—66235 a piping system comprising consecutive U-shaped loops with vertical legs is known through which piping system a fluid can be pumped for the transfer of heat. This piping system is made from metal tubes of U-shaped configuration which tubes at their upper ends are connected in parallel with a common supply tube and a common discharge tube. Furthermore electrical connectors are provided for electrically heating the metal tubes. Said U-shaped tubes have to be prefabricated and the assembly has to take place with respect to the connections with supply and discharge tube in such a way that the tubes primarily are assembled in their proper position. This only can be done with the accumulator mass removed which accumulator mass has to be applied after having completed the assembly of all tubes. This specification does not disclose how the piping system is manufactured but the only alternative of manufacturing would be to dig slots into the accumulator mass which slots never would have the proper mutual distance for connecting the prefabricated U-shaped metal loops with the tube sections for the supply and discharge conduit. Accordingly, the non-disclosed manner of manufacturing of said known accumulator system has to be complicated and can be compared with the generally known system according to which a pit is excavated first to the required depth after which the piping system is installed into said pit whereafter the pit is filled again with a mass of ground or sand.

The object of the invention is to provide a method by means of which the piping system can be manufactured in a very simple way.

According to the invention this is achieved in that a continuous flexible piping is forced into the ground in the form of the said consecutive loops with approximately vertical legs.

Due to the use of flexible piping of great length such as a hose and forcing said piping into the ground in consecutive loops a very simple method was obtained because it is no longer necessary to excavate accordingly nor to refill.

When placing the flexible piping into the ground it is according to the invention advantageous to force the loops into the ground by means of a jig operative to be moved up and down. This, however, is not the only method but it is the most simple one.

Before forcing the next loop into the ground in this embodiment the piping may be guided over a roller at either side of the jig as well as over the lower side of the jig, whereupon these rollers are raised over a height approximately corresponding to half the penetration depth of the jig, whereby the piping is drawn off a reel, this being followed by forcing the jig into the ground while paying out both said rollers at a rate corresponding to about half the rate of penetration of the jig.

Furthermore the invention relates to a piping system placed subterraneously, anyhow at least mainly subterraneously, by applying the above described method, said piping system having consecutive U-shaped loops with approximately vertical legs.

According to the invention this piping system is flexible.

Therein it may be of advantage that the consecutive loops are connected to each other by means of uppermost connecting parts present above the surface and covered by an insulating covering layer.

Moreover it is proposed according to the invention that the lower parts of the loops are fastened into the ground with the aid of anchoring means.

The invention will be illustrated below with reference to the drawing.

Figure 1 diagrammatically shows an at least mainly subterraneous piping system according to the invention.

Figures 2—4 diagrammatically show several stages of forcing a loop of the piping system according to Figure 1 into the ground.

Figure 5 shows a side elevation of the lower part of a first embodiment of a jig which may be utilised by performing the method according to the invention.

Figure 6 shows a horizontal cross section along the plane VI—VI in Figure 5.

Figure 7 shows a horizontal cross section of an other embodiment of a jig.

With reference to the drawing the method according to the invention is elucidated for subterraneously, anyhow at least mainly subterraneously, placing a piping system, for instance for temporarily storing heat, in a preferably water saturated ground, in particular a particulate ground, such as sand. In summer the liquid heated by the heat of the sun may be pumped through this piping system in order to transfer heat to the ground, whereas in winter cold liquid may be pumped through the piping system in order to absorb heat from the ground.

For an effective operation of such a piping system it is required to accommodate a large length of piping within a relatively small space.

According to the invention this requirement is met by placing a flexible piping 1 into the ground to form consecutive loops 2 having approximately vertical legs or piping parts 3.

Where the capacity per one approximately vertical piping part 3 is small it will suffice to use a relatively small diameter which may amount to for instance 10—50 mm, at a mutual distance of this piping part 3 of for instance 500—1500 mm.

At the lower side of a loop 2 the piping parts 3 are connected to each other by means of the lowermost loop part 4 while the consecutive loops 2 are in communication with each other by means of the uppermost connecting parts 5. In this way there may be obtained a system of approximately vertical piping parts 3 with the aid of a single long flexible piping 1, for instance made of a plastic material without any auxiliary or coupling parts being required.

According to the invention the loops 3 are forced consecutively into the ground by means of a jig 6 operative to be moved up and down and having a guiding groove 7 for guiding the piping 1.

When the jig 6 together with the piping 1 entrained thereby has reached the required depth the jig 6 is pulled upward while leaving behind the loop 2 just forced into the ground. Thereupon the jig 6 carried by a (not shown) mobile penetration device is displaced laterally until said jig has reached the proper position for forcing a next loop 2 into the ground.

The operation of placing a next loop 2 in the ground is carried out as follows:

At its one end the piping 1 comes out of the ground and is furthermore wound in store on a reel 8 forming part of the penetration device. Before forcing a next loop 2 into the ground the piping 1 is guided at either side of the jig 6 over a steel roller 9 and also over the lower side of the jib 6. The rollers 9 are then raised by means of the penetration device whereby the piping 1 is drawn off the reel 8. When the rollers have reached a height corresponding approximately to half the penetration depth of the jib 6 the unreeling is stopped and the jig 6 may be forced into the ground which may be performed by ramming or vibrating. During the operation of forcing the jig 6 into the ground both the rollers 9 are paid out at a rate corresponding to about half the rate of penetration so that the reel 8 remains at rest. The lifting wires 10 of the rollers 9 provide for a constant tensioning force in the piping 1.

When the jig 6 is forced to penetrate to the required depth at the lower side this jig will carry a staying means 11 along by means of which the lower most part 4 of the loop remains fastened in the ground upon raising the jig 6.

For protecting the piping 1 against external damages this piping 1 may be brought internally under hydraulic pressure with water immediately after placing the reel 8 on the penetration device, which hydraulic pressure may be maintained above a predeterminate minimum value during the entire placing operation of the loops.

The uppermost connecting parts 5 are present above the surface of the ground and are covered by an insulating covering layer 12.

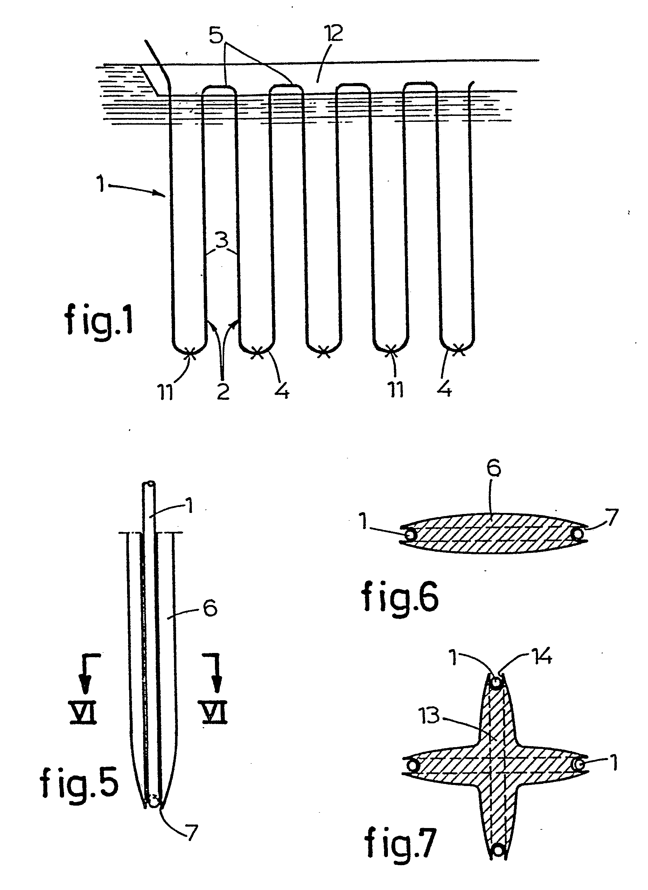

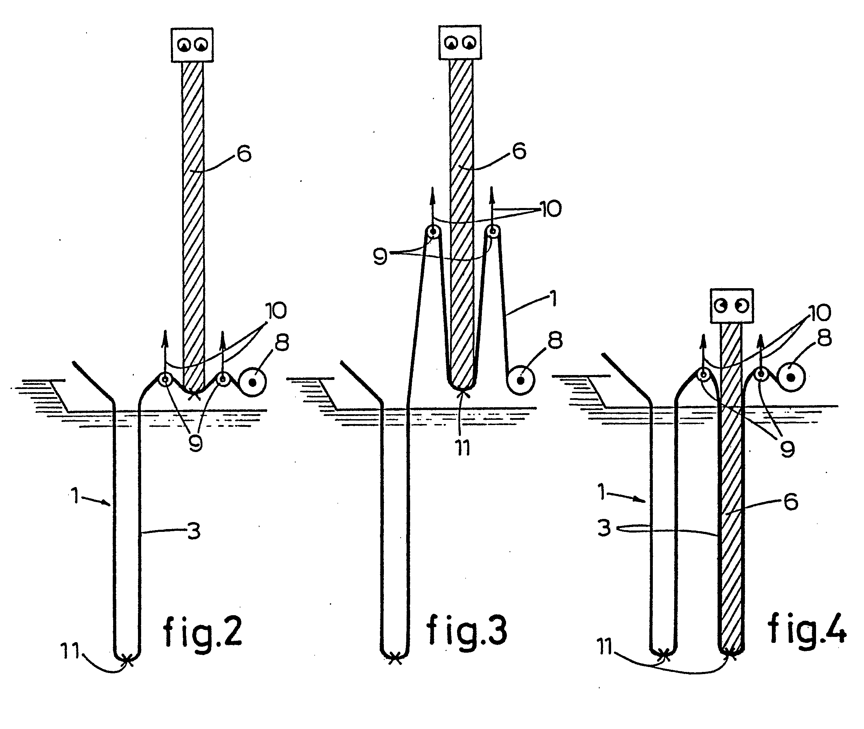

With reference to Figure 7 there is shown a jig 13 in a modified embodiment, this jig has a cruciform cross section by means of which there may be forced simultaneously two pipings 1 wound on different reels 8 into the ground.

This jig 13 is provided therefore with guiding grooves 14 for guiding these two pipings 1.

Forcing two separate piping systems into the ground at the same time has the advantage that one of these systems may be utilized solely for storing heat while the other system may be utilized solely for the recovery of the heat. By placing these two separate piping systems into the ground with the aid of the jig 13 there will be realised an optimum interlacing of the two piping systems within the ground.

The piping system or piping systems, respectively, should of course be surrounded by a shielding spaced at some distance therefrom like used in general.

## Claims

1. A method for subterraneously, or at least mainly subterraneously, placing a piping system, for instance for temporarily storing heat, in a particulate, preferably water saturated, ground, such as sand, through which piping system there may be pumped a hot liquid in order to transfer heat to the ground or a cold liquid in order to absorb heat from the ground respectively, said piping system having the form of consecutive U-shaped loops with vertical legs, characterized in that a continuous flexible piping is forced into the ground in the form of the said consecutive loops (2) with approximately vertical legs (3).

2. The method according to claim 1, characterized in that said loops (2, 3) are forced consecutively into the ground by means of a jig (6) operative to be moved up and down.

3. The method according to claim 2, characterized in that before forcing the next loop (2, 3) into the ground the jig (6) is displaced laterally.

4. The method according to claim 2 or 3, characterized in that the jig (6, 13) is provided with a guiding groove (7, 14) for guiding the piping (1).

5. The method according to claim 2, 3 or 4, characterized in that before forcing the next loop into the ground the piping (1) is guided over a roller (9) at either side of the jig (6) as well as over the lower side of the jig (6), whereupon these rollers (9) are raised over a height approximately corresponding to half the penetration depth of the jig (6), whereby the piping (1) is drawn off a reel, followed by forcing the jig (6) into the ground while paying out both said rollers (9) at a rate corresponding to about half the rate of penetration of the jig (6).

6. The method according to any one of claims 1—5, characterized in that during the operation of forcing said loops (2, 3) into the ground the entire piping (1) is brought internally under hydraulic pressure.

7. The method according to anyone of claims 2—6, characterized in that there is used a jig (13) having a cruciform cross section provided with guiding grooves (14) for guiding two pipings (1) by means of which jig (13) there may be forced simultaneously two loops of two separate piping systems into the ground.

8. A piping system placed subterraneously, or at least mainly subterraneously, by the method according to anyone of claims 1—7, said piping system having consecutive U-shaped loops with approximately vertical legs, characterized in that the piping is flexible.

9. The piping system according to claim 8, characterized in that the consecutive loops (3) are connected to each other by means of uppermost connecting parts (5) present above the surface of the ground and covered by an insulating covering layer (12).

10. The piping system according to claims 8 or 9, characterized in that the lower parts (4) of the loops (2, 3) are fastened into the ground with the aid of anchoring means (11).

**Patentansprüche**

1. Verfahren zum unterirdischen oder zumindest hauptsächlich unterirdischen Verlegen eines Rohrleitungssystems, z.B. für kurzzeitige Wärmespeicherung in einem partikelförmigen, vorzugsweise mit Wasser gesättigten Boden, wie z.B. Sand, wobei durch das Rohrleitungssystem eine heiße Flüssigkeit gepumpt werden kann, um Hitze in den Boden zu übertragen, oder eine kalte Flüssigkeit, um Hitze aus dem Boden zu absorbieren, wobei das Rohrleitungssystem die Form von aufeinanderfolgenden, U-förmigen Schleifen mit vertikalen Schenkeln hat, dadurch gekennzeichnet, daß eine beständig flexible Rohrleitung in den Boden getrieben wird in Form der aufeinanderfolgenden Schleifen (2) mit nahezu vertikalen Schenkeln (3).

2. Verfahren nach Anspruch 1, dadurch gekennzeichnet, daß die Schleifen (2, 3) aufeinanderfolgend in den Grund getrieben werden mit Hilfe eines betriebsfähigen Montagebocks (6), der auf und ab bewegt wird.

3. Verfahren nach Anspruch 2, dadurch gekennzeichnet, daß vor dem Einbringen der nächsten Schleife (2, 3) in den Boden der Montagebock (6) (jig) seitlich versetzt wird.

4. Verfahren nach Anspruch 2 oder 3, dadurch gekennzeichnet, daß der Montagebock (6, 13) mit einer Führungsfuge (7, 14) zum Führen der Rohrleitung (1) versehen ist.

5. Verfahren nach einem der Ansprüche 2, 3 oder 4, dadurch gekennzeichnet, daß vor Eintreiben der nächsten Schleife in den Boden die Rohrleitung (1) über eine Walze (9) auf jeder Seite des Montagebocks (6) sowie über die tiefere Seite des Montagebocks (6) geführt wird, worauf diese Walzen (9) über eine Höhe, die in etwa der Hälfte der Eindringtiefe des Montagebocks (6) entspricht, gehoben werden, wobei die Rohrleitung (1) herausgezogen wird aus der Rolle und anschließend der Montagebock (6) in den Boden eingetrieben wird, während beide Walzen (9) mit einer Geschwindigkeit entsprechend etwa der Hälfte der Geschwindigkeit des Eindringens des Montagebocks (6) abgerollt wird.

6. Verfahren nach einem der Ansprüche 1 bis 5, dadurch gekennzeichnet, daß während des Vorgangs des Eintreibens der Schleifen (2, 3) in den Boden die gesamte Rohrleitung (1) innen unter hydraulischen Druck gebracht wird.

7. Verfahren nach einem der Ansprüche 2 bis 6, dadurch gekennzeichnet, daß ein Montagebock (13) verwendet wird, der einen kreuzförmigen Querschnitt hat und mit Führungsfugen (14) versehen ist zur Führung von zwei Rohrleitungen (1), mit Hilfe dere der Montagebock (13) gleichzeitig zwei Schleifen von zwei verschiedenen Rohrleitungssystemen in den Boden eintreiben kann.

8. Rohrleitungssystem, das durch das Verfahren nach einem der Ansprüche 1 bis 7 unterirdisch oder zumindest hauptsächlich unterirdisch verlegt wurde, wobei das Rohrleitungssystem aufeinanderfolgende U-förmige Schleifen mit annähernd vertikalen Schenkeln hat, dadurch gekennzeichnet, daß die Rohrleitung flexibel ist.

9. Rohrleitungssystem nach Anspruch 8, dadurch gekennzeichnet, daß die aufeinanderfolgenden Schleifen (3) verbunden sind miteinander mit Hilfe von ganz oben verbindenen Teilen (5), die oberhalb der Oberfläche des Bodens und mit einer isolierenden bedeckenden Schicht (12) bedeckt sind.

10. Rohrleitungssystem nach Anspruch 8 oder 9, dadurch gekennzeichnet, daß die unteren Teile (4) der Schleifen (2, 3) im Boden befestigt sind mit Hilfe von Verankerungen (11).

**Revendications**

1. Procédé pour placer sous terre, ou au moins en grande partie sous terre, un système de canalisation, par exemple pour stocker temporairement de la chaleur, dans un sol particulaire et de préférence saturé d'eau comme du sable, système de canalisation à travers lequel on peut pomper respectivement un liquide chaud afin de transférer de la chaleur au sol ou un liquide froid afin d'absorber la chaleur du sol, ledit système de canalisation ayant la forme de boucles consécutives en forme de U avec des branches verticales, caractérisé par le fait qu'une canalisation flexible continue est forcée dans le sol sous la forme desdites boucles consécutives (2) ayant des branches approximativement verticales (3).

2. Procédé selon la revendication 1, caractérisé par le fait que les boucles (2, 3) sont forcées consécutivement dans le sol au moyen d'un calibre (6) pouvant se déplacer de haut en bas et de bas en haut.

3. Procédé selon la revendication 2, caractérisé par le fait qu'avant de force la boucle suivante (2, 3) dans le sol, le calibre (6) est déplacé latéralement.

4. Procédé selon l'une des revendications 2 et 3, caractérisé par le fait que le calibre (6, 13) est pourvu d'une gorge de guidage, (7, 14) pour guider la canalisation (1).

5. Procédé selon l'une des revendications 2 à 4, caractérisé par le fait qu'avant de forcer la boucle suivante dans le sol, la canalisation (1) est guidée sur un rouleau (9) de chaque côté du calibre (6) ainsi que sur le côté inférieur du calibre (6), sur quoi ces rouleaux (9) sont élevés sur une hauteur qui correspond approximativement à la moitié de la profondeur de pénétration du calibre (6), ce par quoi la canalisation (1) est déroulée d'un dévidoir, suivi par l'action de forcer le calibre (6) dans le sol tout en laissant les deux rouleaux (9) se déplacer à une vitesse qui correspond environ à la moitié de la vitesse de pénétration du calibre (6).

6. Procédé selon l'une des revendications 1 à 5, caractérisé par le fait que, pendant l'opération où l'on force lesdites boucles (2, 3) dans le sol, toute la canalisation (1) est amenée intérieurement sous pression hydraulique.

7. Procédé selon l'une des revendications 2 à 6, caractérisé par le fait qu'on utilise un calibre (13) de coupe transversale cruciforme pourvu de gorges de guidage (14) pour guider deux canalisations (1), calibre (13) au moyen duquel on peut forcer simultanément deux boucles de deux systèmes séparés de canalisation dans le sol.

8. Système de tuyauterie placé sous terre, ou au moins en grande partie sous terre par le procédé selon l'une des revendications 1 à 7, ledit système de canalisation ayant des boucles consécutives en forme de U avec des branches approximativement verticales, caractérisé par le fait que la canalisation est flexible.

9. Système de tuyauterie selon la revendication 8, caractérisé par le fait que les boucles consécutives (3) sont connectées les unes aux autres par les parties de connexion (5) les plus élevées qui sont présentes au-dessus de la surface du sol et qui sont couvertes d'une couche de revêtement d'isolation (12).

10. Système de tuyauterie selon l'une des revendications 8 et 9, caractérisé par le fait que les parties inférieures (4) des boucles (2, 3) sont fixées dans le sol à l'aide d'un moyen d'ancrage (11).

fig.1

fig.5

fig.6

fig.7

fig.2

fig.3

fig.4

0026025